# EUROPEAN PATENT APPLICATION

(11) **EP 2 339 440 A2**
(43) Date of publication of application: **29.06.2011**
(21) Application number: 10014799.0
(22) Date of filing: 19.11.2010
(51) Int. Cl.: G06F 3/048

(54) **Mobile terminal and method of controlling the same**

(30) Priority: 24.12.2009 KR 20090130626
(71) Applicant: LG ELECTRONICS INC., Yeongdeungpo-gu Seoul 150-721 (KR)
(72) Inventor: Park, Jaepil, Seoul, 153-801 (KR)
(74) Representative: TER MEER - STEINMEISTER & PARTNER GbR

(57) **Abstract**

A mobile terminal and a method of controlling the same are provided. The mobile terminal comprises a display unit displaying a list of items, and a controller receiving a touch input signal for moving at least one of the items to a first region, deleting the at least one item corresponding to the touch input signal from the list, displaying the title of the deleted item in the first region, substituting the deleted item by another item to update the list, and displaying the updated list. Accordingly, an item is selected through a method of moving the item to a specific region, and thus a previously selected item can be prevented from being cancelled due to a wrong operation.

## Description

### BACKGROUND

### Field

This document relates to a mobile terminal and a method of controlling the same, and more particularly, to a mobile terminal and a method of controlling the same to select an item by moving the item to a specific region so as to prevent a previously selected item from being cancelled due to an erroneous operation.

### Related Art

As the functions of terminals such as personal computers, laptop computers, cellular phones and the like are diversified, the terminals are constructed in the form of a multimedia player having multiple functions of capturing pictures or moving images, playing music, moving image files and games and receiving broadcasting programs.

Terminals can be divided into mobile terminals and stationary terminals. The mobile terminals can be classified into handheld terminals and vehicle mount terminals according to whether users can personally carry the terminals.

To support and enhance functions of a terminal, it can be considered to improve a structural part and/or a software part of the terminal.

A variety of recent terminals including mobile terminals provide more complex and various functions.

### SUMMARY

An aspect of this document is to provide a mobile terminal and a method of controlling the same to select an item by moving the item to a specific region so as to prevent a previously selected item from being cancelled due to an erroneous operation.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.

FIG. 1 is a block diagram of a mobile terminal according to an embodiment of the present invention;

FIG. 2A is a front perspective view of the mobile terminal according to an embodiment of the present invention;

FIG. 2B is a rear perspective view of the mobile terminal according to an embodiment of the present invention;

FIGS. 2C and 2D illustrate forms of the mobile terminal and display screens according to various embodiments of the present invention;

FIG. 3 is a flowchart showing an operation of the mobile terminal shown in FIG. 1 according to a first embodiment of the present invention;

FIGS. 4 through 9 illustrates operations of the mobile terminal shown in FIG. 3;

FIG. 10 shows an operation of the mobile terminal according to a second embodiment of the present invention;

FIG. 11 shows an operation of the mobile terminal according to a third embodiment of the present invention;

FIG. 12 shows an operation of the mobile terminal according to a fourth embodiment of the present invention;

FIG. 13 shows an operation of the mobile terminal according to a fifth embodiment of the present invention;

FIGS. 14 and 15 show an operation of the mobile terminal according to a sixth embodiment of the present invention;

FIG. 16 shows an operation of the mobile terminal according to a seventh embodiment of the present invention; and

FIG. 17 shows an operation of the mobile terminal according to an eighth embodiment of the present invention.

### DETAILED DESCRIPTION

The present invention will now be described more fully with reference to the accompanying drawings, in which exemplary embodiments of the invention are shown. The invention may, however, be embodied in many different forms and should not be construed as being limited to the embodiments set forth herein; rather, there embodiments are provided so that this disclosure will be thorough and complete, and will fully convey the concept of the invention to those skilled in the art.

Hereinafter, a mobile terminal relating to the present invention will be described below in more detail with reference to the accompanying drawings. In the following description, suffixes "module" and "unit" are given to components of the mobile terminal in consideration of only facilitation of description and do not have meanings or functions discriminated from each other.

The mobile terminal described in the specification can include a cellular phone, a smart phone, a laptop computer, a digital broadcasting terminal, personal digital assistants (PDA), a portable multimedia player (PMP), a navigation system and so on.

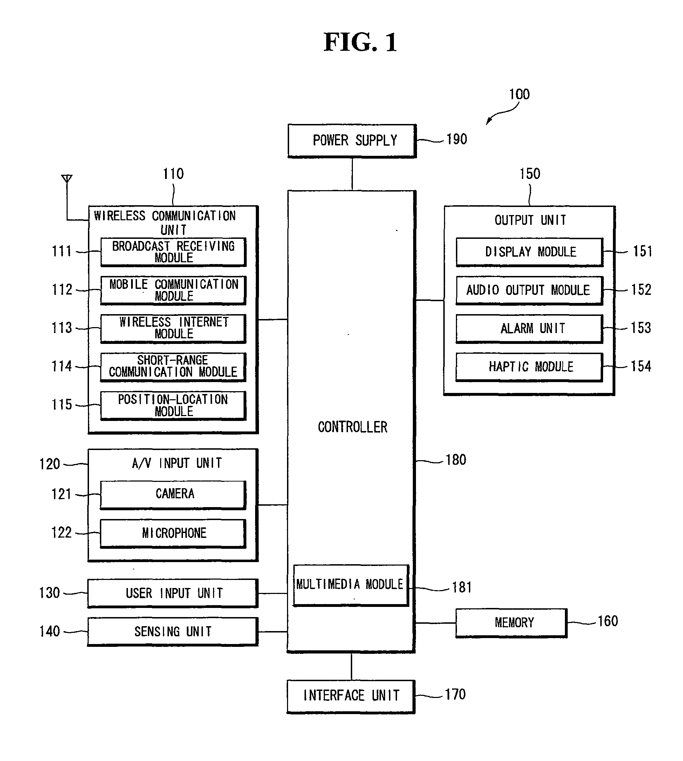

FIG. 1 is a block diagram of a mobile terminal 100 according to an embodiment of the present invention. The mobile terminal 100 can include a radio communication unit 110, an audio/video (A/V) input unit 120, a user input unit 130, a sensing unit 140, an output unit 150, a memory 160, an interface 170, a controller 180, and a power supply 190. The components shown in FIG. 1 are not essential parts and the number of components included in the mobile terminal can be varied.

The components of the mobile terminal will now be described.

The radio communication unit 110 can include at least one module that enables radio communication between the mobile terminal 100 and a radio communication system or between the mobile terminal 100 and a network in which the mobile terminal 100 is located. For example, the radio communication unit 110 can include a broadcasting receiving module 111, a mobile communication module 112, a wireless Internet module 113, a local area communication module 114 and a position information module 115.

The broadcasting receiving module 111 receives broadcasting signals and/or broadcasting related information from an external broadcasting management server through a broadcasting channel.

The broadcasting channel can include a satellite channel and a terrestrial channel. The broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals but also signals in the form of combination of a TV broadcasting signal and a radio broadcasting signal.

The broadcasting related information can be information on a broadcasting channel, a broadcasting program or a broadcasting service provider. The broadcasting related information can be provided even through a mobile communication network. In this case, the broadcasting related information can be received by the mobile communication module 112.

The broadcasting related information can exist in various forms. For example, the broadcasting related information can exist in the form of electronic program guide (EPG) of digital multimedia broadcasting (DMB) or in the form of electronic service guide (ESG) of digital video broadcast-handheld (DVB-H).

The broadcasting receiving module 111 receives broadcasting signals using various broadcasting systems. Particularly, the broadcasting receiving module 111 can receive digital broadcasting signals using digital broadcasting systems such as digital multimedia broadcasting-terrestrial (DMB-T), digital multimedia broadcasting-satellite (DMB-S), media forward link only (MediaFLO), DVB-H and integrated services digital broadcast-terrestrial (ISDB-T) systems. The broadcasting receiving module 111 can be constructed to be suited to broadcasting systems providing broadcasting signals other than the above-described digital broadcasting systems.

The broadcasting signals and/or broadcasting related information received through the broadcasting receiving module 111 can be stored in the memory 160.

The mobile communication module 112 transmits/receives a radio signal to/from at least one of a base station, an external terminal and a server on a mobile communication network. The radio signal can include a voice call signal, a video telephony call signal or data in various forms according to transmission and receiving of text/multimedia messages.

The wireless Internet module 113 means a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique.

The local area communication module 114 means a module for local area communication. Bluetooth, radio frequency identification (RFID), infrared data association (IrDA), ultra wideband (UWB) and ZigBee can be used as a local area communication technique.

The position information module 115 confirms or obtains the position of the mobile terminal. A global positioning system (GPS) module is a representative example of the position information module 115. According to the current technology, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude at a predetermined time. Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and can include a camera 121 and a microphone 122. The camera 121 processes image frames of still images or moving images obtained by an image sensor in a video telephony mode or a photographing mode. The processed image frames can be displayed on a display unit 151.

The image frames processed by the camera 121 can be stored in the memory 160 or transmitted to an external device through the radio communication unit 110. The mobile terminal 100 can include at least two cameras according to constitution of the terminal.

The microphone 122 receives an external audio signal in a call mode, a recording mode or a speed recognition mode and processes the received audio signal into electric audio data. The audio data can be converted into a form that can be transmitted to a mobile communication base station through the mobile communication module 112 and output in the call mode. The microphone 122 can employ various noise removal algorithms for removing noise generated when the external audio signal is received.

The user input unit 130 receives input data for controlling the operation of the terminal from a user. The user input unit 130 can include a keypad, a dome switch, a touch pad (constant voltage/capacitance), jog wheel, jog switch and so on.

The sensing unit 140 senses the current state of the mobile terminal 100, such as open/close state of the mobile terminal 100, the position of the mobile terminal 100, whether a user touches the mobile terminal 100, the direction of the mobile terminal 100 and acceleration/deceleration of the mobile terminal 100 and generates a sensing signal for controlling the operation of the mobile terminal 100. For example, the sensing unit 140 can sense whether a slide phone is opened or closed when the mobile terminal 100 is the slide phone. Furthermore, the sensing unit 140 can sense whether the power supply 190 supplies power and whether the interface 170 is connected to an external device. The sensing unit 140 can include a proximity sensor.

The output unit 150 generates visual, auditory or tactile output and can include the display unit 151, an audio output module 152, an alarm 153 and a haptic module 154.

The display unit 151 displays information processed by the mobile terminal 100. For example, the display unit 151 displays UI or graphic user interface (GUI) related to a telephone call when the mobile terminal is in the call mode. The display unit 151 displays a captured or/and received image, UI or GUI when the mobile terminal 100 is in the video telephony mode or the photographing mode.

The display unit 151 can include at least one of a liquid crystal display, a thin film transistor liquid crystal display, an organic light-emitting diode display, a flexible display and a three-dimensional display.

Some of these displays can be of a transparent type or a light transmission type. This can be referred to as a transparent display. The transparent display includes a transparent liquid crystal display. The rear structure of the display unit 151 can also be of the light transmission type. According to this structure, a user can see an object located behind the body of the mobile terminal 100 through an area of the body of the mobile terminal 100, which is occupied by the display unit 151.

The mobile terminal 100 can include at least two display units 151 according to constitution of the terminal. For example, the mobile terminal 100 can include a plurality of displays that are arranged on a single face at a predetermined distance or integrated. Otherwise, the plurality of displays can be arranged on different sides.

In the case where the display unit 151 and a sensor sensing touch (referred to as a touch sensor hereinafter) form a layered structure, which is referred to as a touch screen hereinafter, the display unit 151 can be used as an input device in addition to an output device. The touch sensor can be in the form of a touch film, a touch sheet and a touch pad, for example.

The touch sensor can be constructed such that it converts a variation in pressure applied to a specific portion of the display unit 151 or a variation in capacitance generated at a specific portion of the display unit 151 into an electric input signal. The touch sensor can be constructed such that it can sense pressure of touch as well as the position and area of touch.

When touch input is applied to the touch sensor, a signal corresponding to the touch input is transmitted to a touch controller. The touch controller processes the signal and transmits data corresponding to the processed signal to the controller 180. Accordingly, the controller 180 can detect a touched portion of the display 151.

Referring to FIG. 1, the proximity sensor 141 can be located in an internal region of the mobile terminal, surrounded by the touch screen, or near the touch screen. The proximity sensor senses an object approaching a predetermined sensing face or an object located near the proximity sensor using electromagnetic force or infrared rays without having mechanical contact. The proximity sensor has lifetime longer than that of a contact sensor and has wide application.

The proximity sensor includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

A capacitive touch screen is constructed such that proximity of a pointer is detected through a variation in an electric field according to the proximity of the pointer. In this case, the touch screen (touch sensor) can be classified as a proximity sensor.

For convenience of explanation, an action of approaching the pointer to the touch screen while the pointer it not being in contact with the touch screen such that location of the pointer on the touch screen is recognized is referred to as "proximity touch" and an action of bring the pointer into contact with the touch screen is referred to as "contact touch" in the following description. A proximity touch point of the pointer on the touch screen means a point of the touch screen to which the pointer corresponds perpendicularly to the touch screen when the pointer proximity-touches the touch screen.

The proximity sensor senses proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can be displayed on the touch screen.

The audio output module 152 can output audio data received from the radio communication unit 110 or stored in the memory 160 in a call signal receiving mode, a telephone call mode or a recording mode, a speech recognition mode and a broadcasting receiving mode. The audio output module 152 outputs audio signals related to functions (for example, a call signal incoming tone, a message incoming tone, etc.) performed in the mobile terminal 100. The audio output module 152 can include a receiver, a speaker, a buzzer, etc.

The alarm 153 outputs a signal for indicating generation of an event of the mobile terminal 100. Examples of events generated in the mobile terminal include receiving of a call signal, receiving of a message, input of a key signal, input of touch, etc. The alarm 153 can output signals in forms different from video signals or audio signals, for example, a signal for indicating generation of an event through vibration. The video signals or the audio signals can be also output through the display unit 151 or the audio output module 152.

The haptic module 154 generates various haptic effects that the user can feel. A representative example of the haptic effects is vibration. The intensity and pattern of vibration generated by the haptic module 154 can be controlled. For example, different vibrations can be combined and output or sequentially output.

The haptic module 154 can generate a variety of haptic effects including an effect of stimulus according to arrangement of pins vertically moving for a contact skin face, an effect of stimulus according to jet force or sucking force of air through a jet hole or a sucking hole, an effect of stimulus rubbing the skin, an effect of stimulus according to contact of an electrode, an effect of stimulus using electrostatic force and an effect according to reproduction of cold and warmth using an element capable of absorbing or radiating heat in addition to vibrations.

The haptic module 154 can not only transmit haptic effects through direct contact but also allow the user to feel haptic effects through kinesthetic sense of his fingers or arms. The mobile terminal 100 can include at least two haptic modules 154 according to constitution of the mobile terminal.

The memory 160 can store a program for the operation of the controller 180 and temporarily store input/output data (for example, phone book, messages, still images, moving images, etc.). The memory 160 can store data about vibrations and sounds in various patterns, which are output from when a touch input is applied to the touch screen.

The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can operate in relation to a web storage performing the storing function of the memory 160 on the Internet.

The interface 170 serves as a path to all external devices connected to the mobile terminal 100. The interface 170 receives data from the external devices or power and transmits the data or power to the internal components of the mobile terminal 100 or transmits data of the mobile terminal 100 to the external devices. The interface 170 can include a wired/wireless headset port, an external charger port, a wired/wireless data port, a memory card port, a port for connecting a device having a user identification module, an audio I/O port, a video I/O port, an earphone port, etc., for example.

An identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a port.

The interface 170 can serve as a path through which power from an external cradle is provided to the mobile terminal 100 when the mobile terminal 100 is connected to the external cradle or a path through which various command signals inputted by the user through the cradle to the mobile terminal 100. The various command signals or power input from the cradle can be used as a signal for confirming whether the mobile terminal 100 is correctly set in the cradle.

The controller 180 controls the overall operation of the mobile terminal. For example, the controller 180 performs control and processing for voice communication, data communication and video telephony. The controller 180 can include a multimedia module 181 for playing multimedia. The multimedia module 181 can be included in the controller 180 or separated from the controller 180.

The controller 180 can perform a pattern recognition process capable of recognizing handwriting input or picture-drawing input applied to the touch screen as characters or images.

The power supply 190 receives external power and internal power and provides power required for the operations of the components of the mobile terminal under the control of the controller 180.

Various embodiments of the present invention can be implemented in a computer or similar device readable recording medium using software, hardware or a combination thereof, for example.

According to hardware implementation, the embodiments of the present invention can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units for executing functions. In some cases, the embodiments can be implemented by the controller 180.

According to software implementation, embodiments such as procedures or functions can be implemented with a separate software module executing at least one function or operation. Software codes can be implemented according to a software application written in an appropriate software language. Furthermore, the software codes can be stored in the memory 160 and executed by the controller 180.

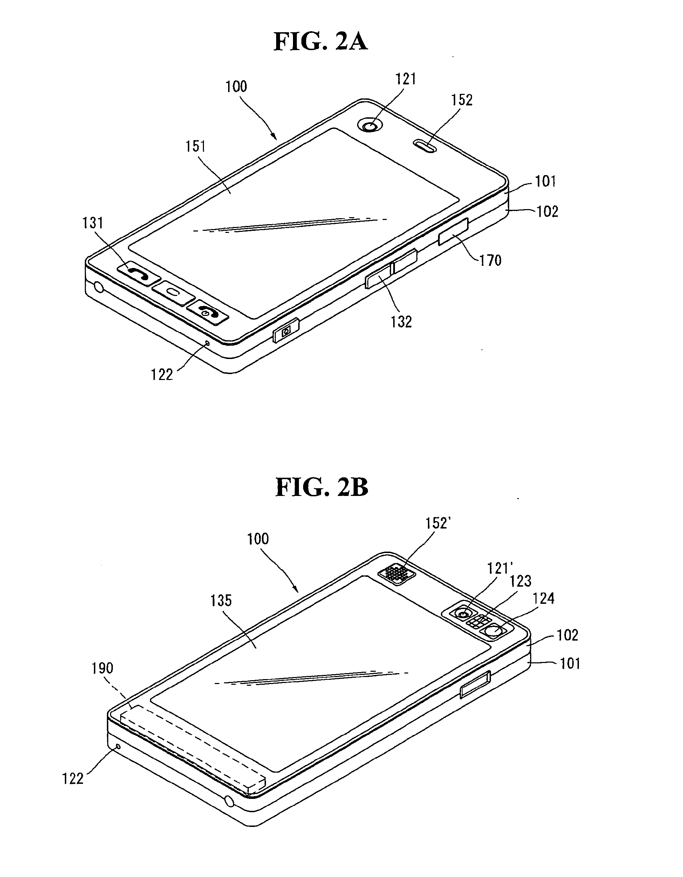

FIG. 2A is a front perspective view of a mobile terminal or a handheld terminal 100 according to an embodiment of the present invention.

The handheld terminal 100 has a bar type terminal body. However, the present invention is not limited to a bar type terminal and can be applied to terminals of various types including slide type, folder type, swing type and swivel type terminals having at least two bodies that are relatively movably combined.

The terminal body includes a case (a casing, a housing, a cover, etc.) forming the exterior of the terminal 100. In the present embodiment, the case can be divided into a front case 101 and a rear case 102. Various electronic components are arranged in the space formed between the front case 101 and the rear case 102. At least one middle case can be additionally arranged between the front case 101 and the rear case 102.

The cases can be formed of plastics through injection molding or made of a metal material such as stainless steel (STS) or titanium (Ti).

The display unit 151, the audio output unit 152, the camera 121, the user input unit 130/131 and 132, the microphone 122 and the interface 170 can be arranged in the terminal body, specifically, in the front case 101.

The display unit 151 occupies most part of the main face of the front case 101. The audio output unit 152 and the camera 121 are arranged in a region in proximity to one of both ends of the display unit 151 and the user input unit 131 and the microphone 122 are located in a region in proximity to the other end of the display unit 151. The user input unit 132 and the interface 170 are arranged on the sides of the front case 101 and the rear case 102.

The user input unit 130 is operated to receive commands for controlling the operation of the handheld terminal 100 and can include a plurality of operating units 131 and 132. The operating units 131 and 132 can be referred to as manipulating portions and employ any tactile manner in which a user operates the operating units 131 and 132 while having tactile feeling.

First and second operating units 131 and 132 can receive various inputs. For example, the first operating unit 131 receives commands such as start, end and scroll and the second operating unit 132 receives commands such as control of the volume of sound output from the audio output unit 152 or conversion of the display unit 151 to a touch recognition mode.

FIG. 2B is a rear perspective view of the handheld terminal shown in FIG. 2A according to an embodiment of the present invention.

Referring to FIG. 2A, a camera 121' can be additionally attached to the rear side of the terminal body, that is, the rear case 102. The camera 121' has a photographing direction opposite to that of the camera 121 shown in FIG. 2A and can have pixels different from those of the camera 121 shown in FIG. 2A.

For example, it is desirable that the camera 121 has low pixels such that it can capture an image of the face of a user and transmit the image to a receiving part in case of video telephony while the camera 121' has high pixels because it captures an image of a general object and does not immediately transmit the image in many cases. The cameras 121 and 121' can be attached to the terminal body such that they can be rotated or pop-up.

A flash bulb 123 and a mirror 124 are additionally arranged in proximity to the camera 121'. The flash bulb 123 lights an object when the camera 121' takes a picture of the object. The mirror 124 is used for the user to look at his/her face in the mirror when the user wants to self-photograph himself/herself using the camera 121'.

An audio output unit 152' can be additionally provided on the rear side of the terminal body. The audio output unit 152' can achieve a stereo function with the audio output unit 152 shown in FIG. 2A and be used for a speaker phone mode when the terminal is used for a telephone call.

A broadcasting signal receiving antenna 124 can be additionally attached to the side of the terminal body in addition to an antenna for telephone calls. The antenna 124 constructing a part of the broadcasting receiving module 111 shown in FIG. 1 can be set in the terminal body such that the antenna 124 can be pulled out of the terminal body.

The power supply 190 for providing power to the handheld terminal 100 is set in the terminal body. The power supply 190 can be included in the terminal body or detachably attached to the terminal body.

A touch pad 135 for sensing touch can be additionally attached to the rear case 102. The touch pad 135 can be of a light transmission type as the display unit 151. In this case, if the display unit 151 outputs visual information through both sides thereof, the visual information can be recognized through the touch pad 135. The information output through both sides of the display unit 151 can be controlled by the touch pad 135. Otherwise, a display is additionally attached to the touch pad 135 such that a touch screen can be arranged even in the rear case 102.

The touch pad 135 operates in connection with the display unit 151 of the front case 101. The touch pad 135 can be located in parallel with the display unit 151 behind the display unit 151.The touch panel 135 can be identical to or smaller than the display unit 151 in size.

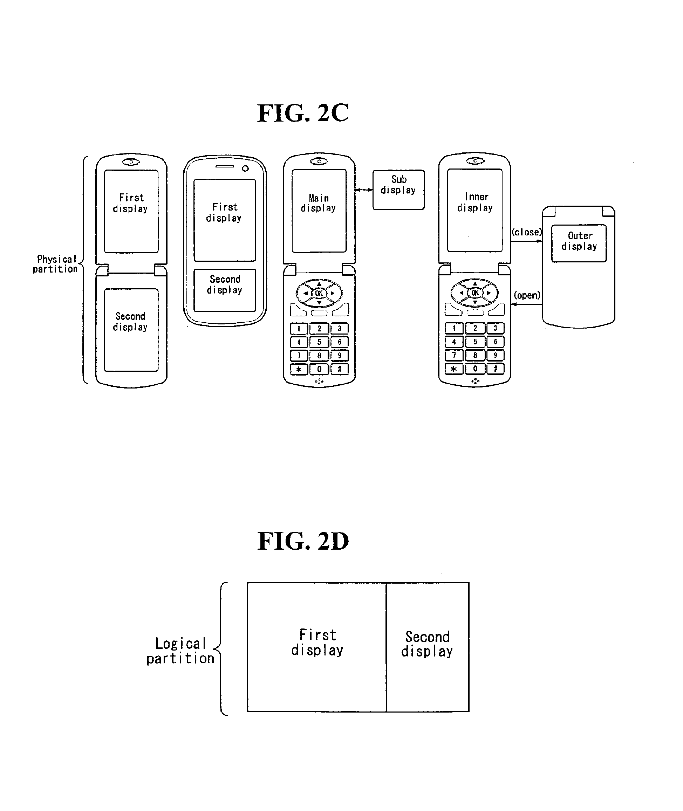

FIGS. 2C and 2D illustrate the mobile terminal 100 and the display unit 151 according to various embodiments of the present invention.

Referring to FIG. 2C, the display unit 151 can include a first display and a second display which are physically separated from each other. In a folder type or slide type mobile terminal having two bodies connected through a hinge or slide, the first display (or main display) can be formed on the inner face or outer face of one of the bodies and the second display (or sub display) can be formed on the inner face or outer face of the other body. The sub display is separated from the mobile terminal and detachably combined with the mobile terminal body through an interface to display data from the mobile terminal 100.

The display unit 151 can include first and second displays which are logically separated from each other in a display panel, as illustrated in FIG. 2D.

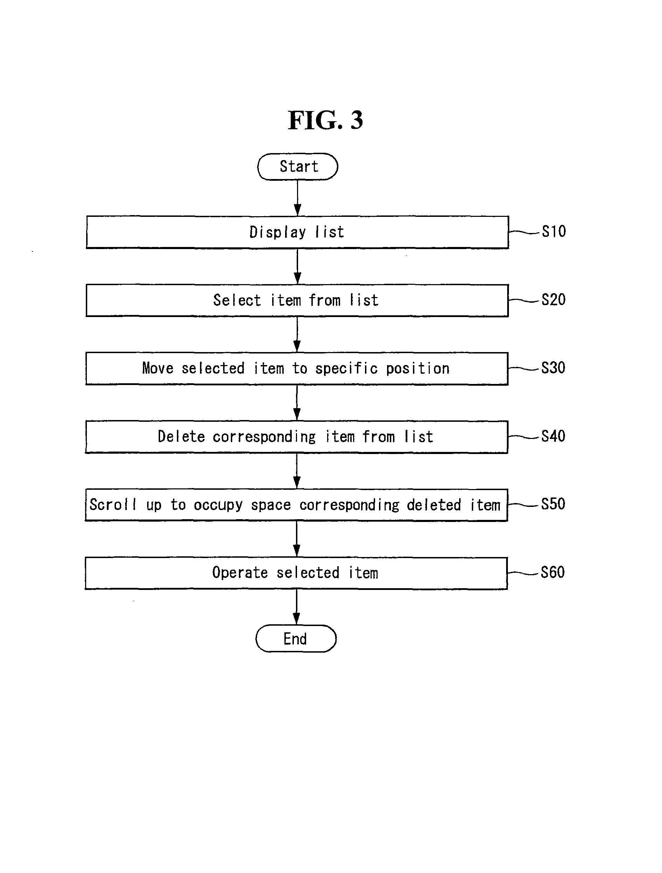

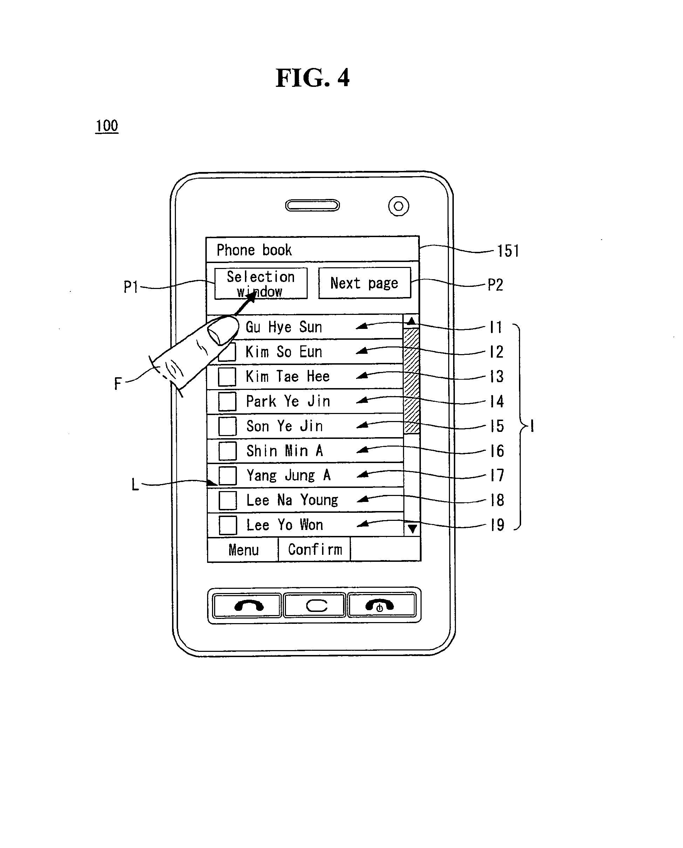

FIG. 3 is a flowchart showing an operation of the mobile terminal 100 shown in FIG. 1 according to a first embodiment of the present invention and FIGS. 4 through 9 illustrates operations of the mobile terminal 100 shown in FIG. 3.

Referring to FIGS. 3 through 9, the operation of the mobile terminal 100 may include step S10 of displaying a list L.

The list L may be information stored in the memory 160 of the mobile terminal 100, shown in FIG. 1, or information received through the wireless communication unit 110 shown in FIG. 1. The list L may include various information items. The list L is not limited to information represented by characters. The list L may include information that can be displayed on the mobile terminal 100, for example, phone numbers, received messages, sent messages, phone records, stored music files, stored picture files, etc. That is, the list L means information that can be visually represented on the display unit 151.

An item I may be selected from the list in step S20. The item I means an element included in the list. The item I may be a phone number or a name corresponding to the phone number if the list L corresponds to a phone book. The item I may be a message if the list L includes received messages. Furthermore, the item I may be a phone record if the list L includes phone records. Accordingly, a set of items may be considered as the list L.

The item I may be selected from the list L through a user's touch applied to the display unit 151. That is, the user can touch the item I or drag the touched item to select the item I. The selection of the item I may be visually indicated in such a manner that the color of the selected item I is changed or the selected item I is checked.

When the item I is selected, the selected item I may be moved to a specific position in step S30.

When the specific item I is selected from the list L, the user can perform a specific operation on the item I. The specific operation in the mobile terminal 100 according to an embodiment of the present invention may include an operation of dragging the item I to a specific region of the display unit 151. That is, the user may drag the selected item I to a specific position of the display unit 151 to move the item I to the specific position.

When the item I is moved to the specific position, the item I may be deleted from the list L in step S40.

The touch operation of dragging the item I to the specific position may be intuitively recognized as a user's intention to delete the item I from the list L. The item I selected by the user from the list L may be deleted from the list L to meet the intuition according to user's touch. However, the item I deleted from the list L may not be completely removed from the list L and may be temporarily moved to the specific position. That is, the item I may be returned to the initial position if any operation is not performed on the item I moved to the specific position. The mobile terminal 100 can smoothly select plural items included in the list L. In the case of a conventional mobile terminal, the user touched multiple items one by one when the user wanted to select the multiple items. In this case, previously selected items might be cancelled due to an erroneous touch operation when the user selected the items. In the mobile terminal 100 according to embodiments of the present invention, multiple items are selected through the operation of selecting the items and moving the selected items, and thus previously selected items can be prevented from being cancelled due to an erroneous touch operation. Furthermore, various operations can be performed on the selected items.

When the item I is deleted from the list L, remaining items may be scrolled up to occupy the space of the deleted item I in step S50.

When the item I is deleted from the list L, the remaining items occupy the space of the selected item to update the list L. Since the list L is updated and new items are continuously displayed on the display unit 151, necessity for the user to perform an additional touch operation of turning the page may be minimized.

An operation may be performed on the selected item I in step S60.

The selected item I is moved to the specific position through the aforementioned touch operation and temporarily stored. The user can perform various operations on the temporarily stored item. For example, the user can delete, move or copy the temporarily stored item I. Furthermore, the whole or part of the temporarily stored item I may be cancelled. If the selection of the item I is cancelled without having any operation performed on the item I, the item I may be returned to the initial position.

As shown in FIG. 4, the list L corresponding to a phone book may be displayed on the display unit 151 of the mobile terminal 100. The phone book may be stored in the memory 160 of the mobile terminal 100, shown in FIG. 1

The list L may display items respectively corresponding to names of people having phone numbers included in the phone book. The number of the displayed items I may be varied according to factors such as the size of the display unit 151, a font size, etc.

The user can select a first item I1 by touching the first item I1 with a finger F. When the user wants to perform the same operation on multiple items, for example, when the user wants to delete first through seventh items I1 through I7, the user is required to repeatedly select the first through seventh items I1 through I7 one by one and select a deletion menu to delete the first through seventh items I1 through I7 in the case of a conventional mobile terminal. However, the selection of the items may be cancelled due to an erroneous touch operation. The mobile terminal 100 according to the embodiments of the present invention may select an item and drag the selected item to a selection window P1.

The selection window P1 may be displayed in a predetermined region of the display unit 151. The user may perform a touch operation of dragging the selected item I and dropping the selected item I to the selection window P1. The item I dragged and dropped by the user may be temporarily deleted from the list L.

A next page window P2 may be used to display items following the currently displayed items I. That is, when the user touches the next page window P2, the list L can be updated page by page.

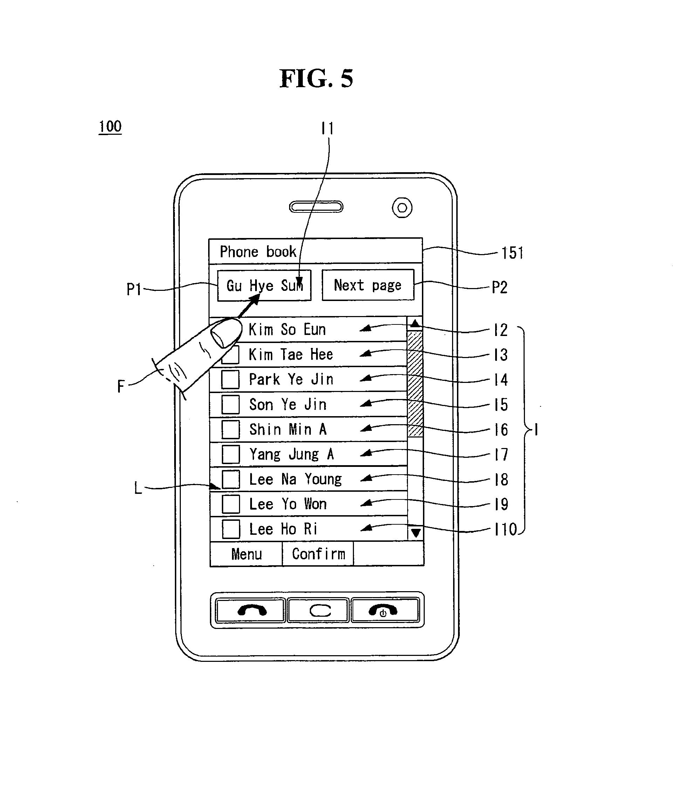

Referring to FIG. 5, the selection window P1 displays the first item I1 dropped to the selection window P1 according to the previous operation. That is, the first item I1 has been moved from the list L to the selection window P1. The selection window P1 may display an item finally dropped by the user. Since the selection window P1 displays the last dropped item, the user can easily recognize which item the user has dropped to the selection window P1. The user may touch a second item I2 and drops the second item I1 to the selection window P1 to perform multi-selection.

When the first item I1 is dropped to the selection window P1, the second item I2 may be scrolled up and located in the space of the first item I1 in the list L1. The items of the list L are sequentially scrolled up from the second item I2, and thus the last item of the list L may be changed from a ninth item I1 to a tenth item I10.

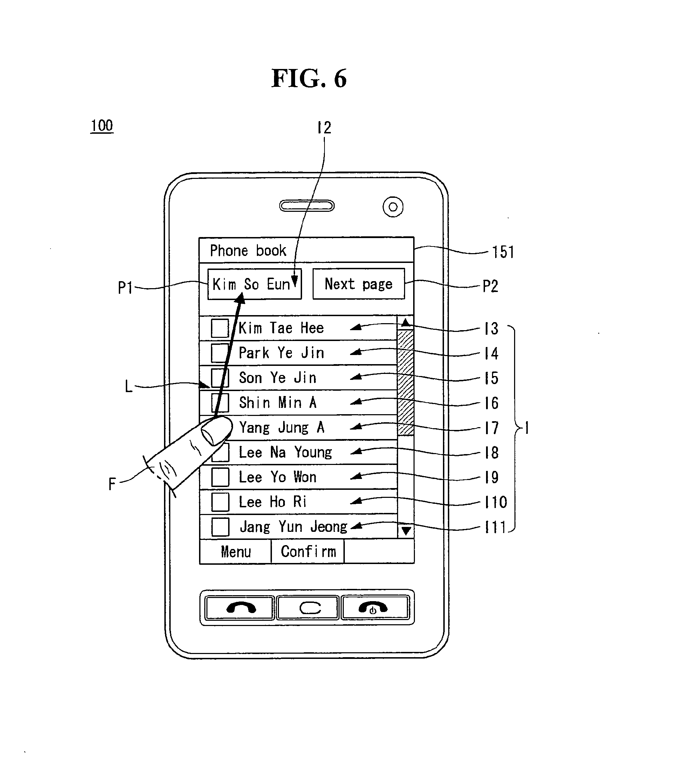

Referring to FIG. 6, the selection window P1 displays the second item I2 dropped to the selection window P1 according to a previous operation. The selection window P1 may display the finally dropped item replacing the previous item. As described above with reference to FIGS. 4 and 5, the user can move items to the selection window P1 one by one. Accordingly, it is possible to prevent a selected item from being cancelled due to an erroneous touch applied to the selected item. FIG. 6 illustrates a case of selecting multiple items at a time and moving the selected items to the selection window P1.

The user may touch the eighth item I8 located in the middle of the list L. The user may move items from the third item I3, located at the top of the list L, to the eighth item I8 to the selection window P1 at once by dragging the touched eighth item I8 and dropping the eighth item I8 to the selection window P1.

Even when the user touches the eighth item I8 located in the middle of the list L, only the touched eighth item I8 can be moved to the selection item P1. In this case, it may be considered that the user does not want to select items located above the eighth item I8. Accordingly, the third through seventh items I3 through I7 may be deleted from the list L and the following items may be displayed in the spaces corresponding to the third through seventh items I3 through I7 to update the list L. That is, the list L can be updated even when the user does not select the next page window P2.

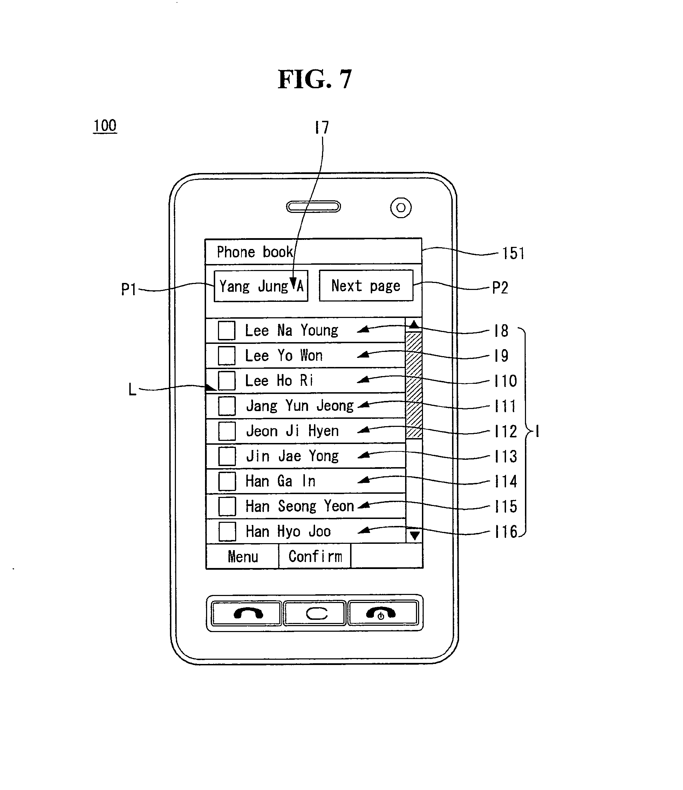

Referring to FIG. 7, when the user moves multiple items to the selection window P1 at once, the space corresponding to the moved items may be occupied by newly scrolled-up items. Accordingly, new items can be displayed on the display unit 151 of the mobile terminal 100 all the time, and thus the necessity for the user to touch the next page window P2 to display new items can be minimized.

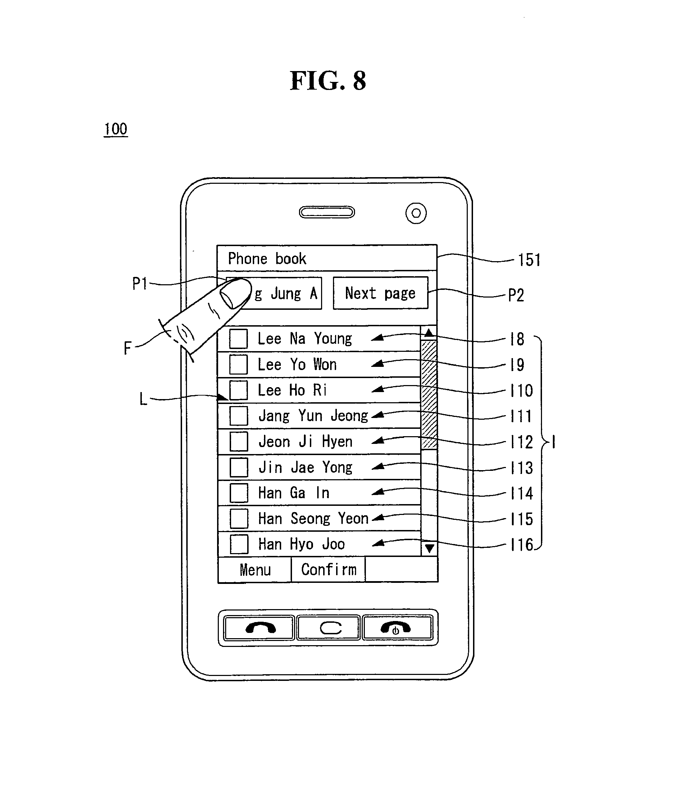

Referring to FIG. 8, after the user finishes selection of items, the user can touch the selection window P1.

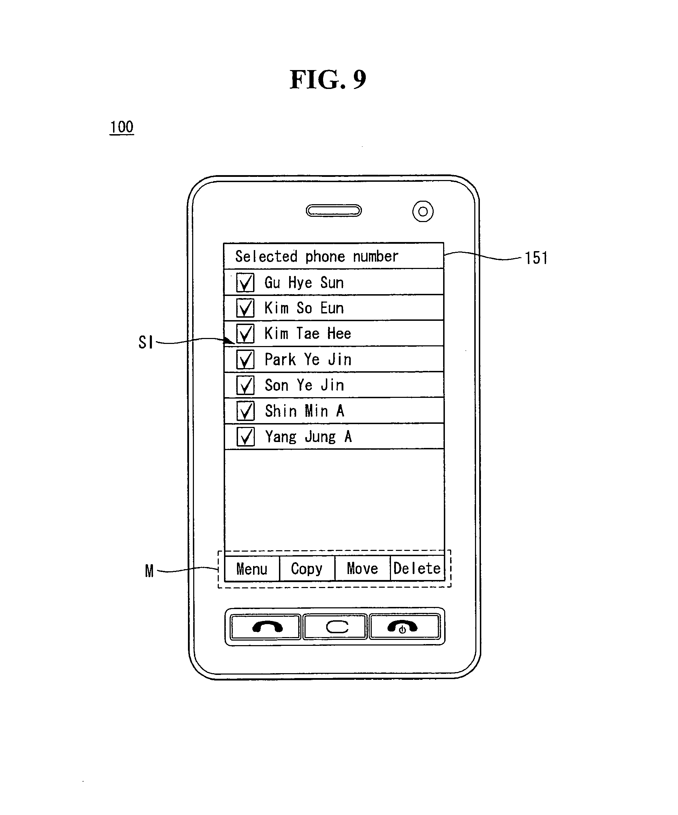

Referring to FIG. 9, when the selection window P1 is touched by the user, selected items SI may be displayed. The user may select an item from the selected items SI to cancel the selected item.

A function menu M may be displayed in a predetermined region of the display unit 151. The function menu M may display functions of operating the selection items SI. For example, functions of copying, moving and deleting the selected items SI may be displayed as the function menu M. The user can select one of the functions to operate the selected items SI simultaneously.

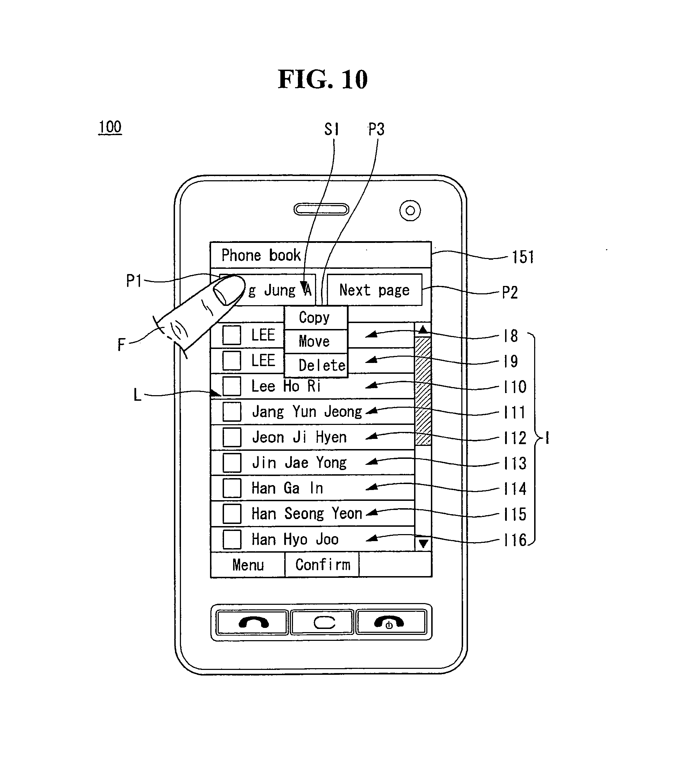

FIG. 10 illustrates an operation of the mobile terminal 100 according to a second embodiment of the present invention.

Referring to FIG. 10, when the user selects items and touches the selection window P1, a function window P3 may be displayed. The function window P3 may display functions of operating the selected items SI. In the current embodiment, a function can be easily executed on the selected items SI as compared to a case of displaying a separate screen and displaying the selected items SI on the separate screen. That is, if a deleting function is selected from the function window P3, the selected items SI moved to the selection window P1 can be simultaneously deleted.

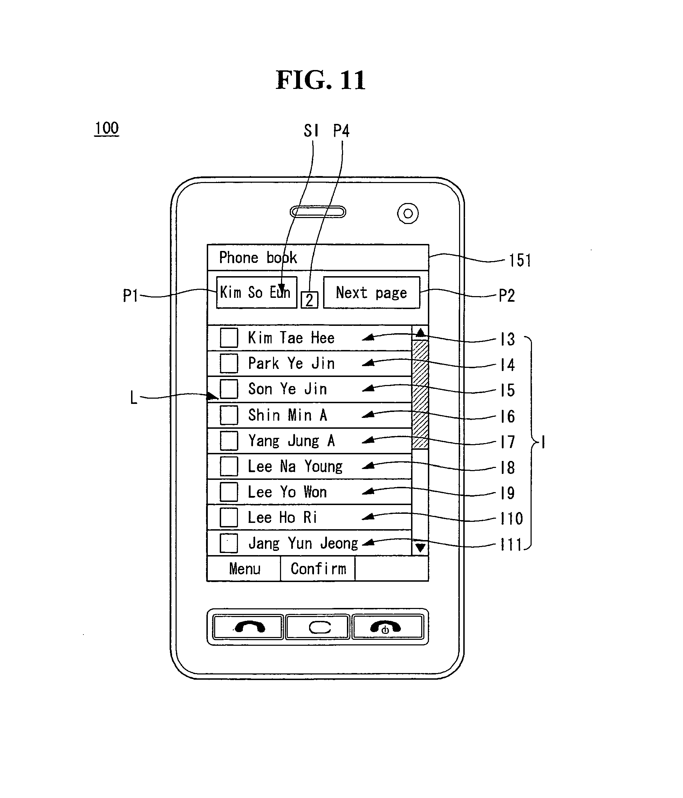

FIG. 11 illustrates an operation of the mobile terminal 100 according to a third embodiment of the present invention.

Referring to FIG. 11, a number display window P4 displaying the number of selected items SI may be displayed.

The number display window P4 may display the number of items that have been selected up to now. That is, the number display window P4 may display the number of items moved to the selection window P1 through drag-and-drop operations by the user. Since the number display window P4 displays the number of the selected items SI, the necessity for the user to select the selection window P1 to confirm the selected items can be reduced, and thus the mobile terminal 100 can be conveniently used.

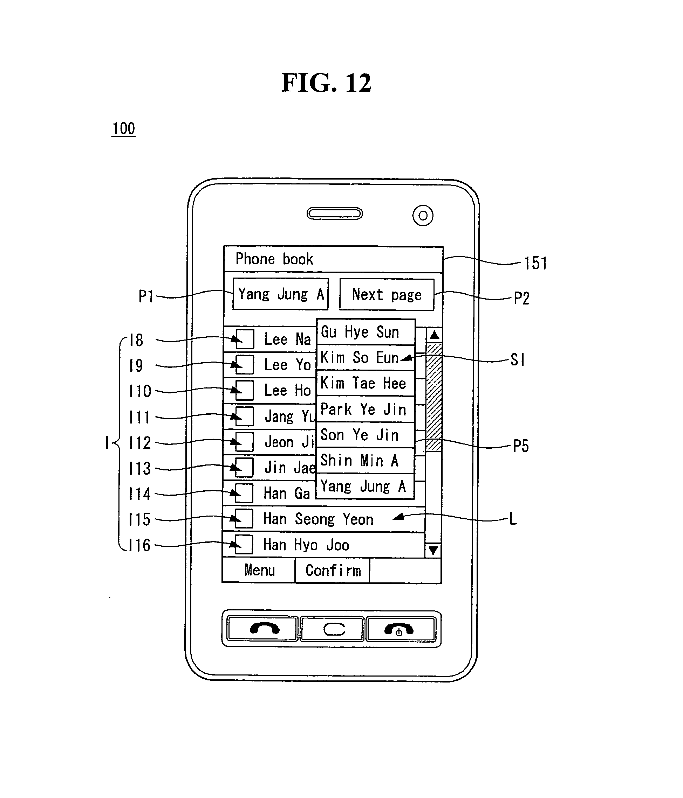

FIG. 12 illustrates an operation of the mobile terminal 100 according to a fourth embodiment of the present invention.

Referring to FIG. 12, an item display window P5 displaying the selected items SI may be displayed.

The item display window P5 may be displayed in a predetermined region of the display unit 151 to display the items SI selected up to now. That is, when the user selects items from the list L and drops the selected items to the selection window P1, the selected items SI may be sequentially displayed in the item display window P5. Whenever the user drops an item to the selection window P1, the number of selected items displayed in the item display window P5 may increase.

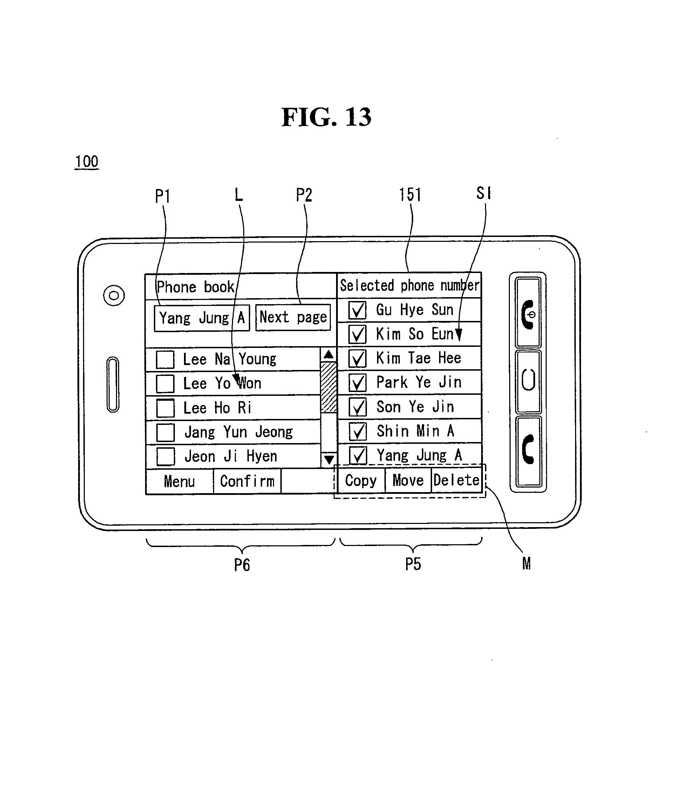

FIG. 13 illustrates an operation of the mobile terminal 100 according to a fifth embodiment of the present invention.

Referring to FIG. 13, the mobile terminal 100 may display a main window P6 in which the list L is displayed and the item display window P5 in which the selected items SI are displayed in the landscape form. The landscape form can secure the lateral space of the display unit 151 as compared to the portrait form. Accordingly, the main window P6 may be arranged at the left side and the item display window P5 may be arranged at the right side by using the secured lateral space. Furthermore, the function menu M may be displayed in the item display window P5. According to the mobile terminal 100 according to the fifth embodiment of the present invention, the user is not required to open an additional window to confirm the selected icons I, and thus use convenience of use can be improved.

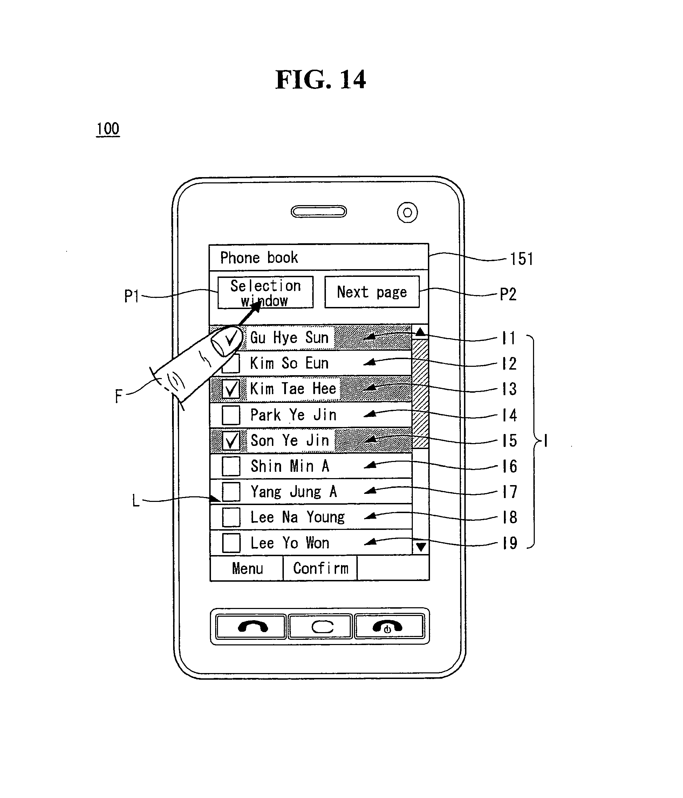

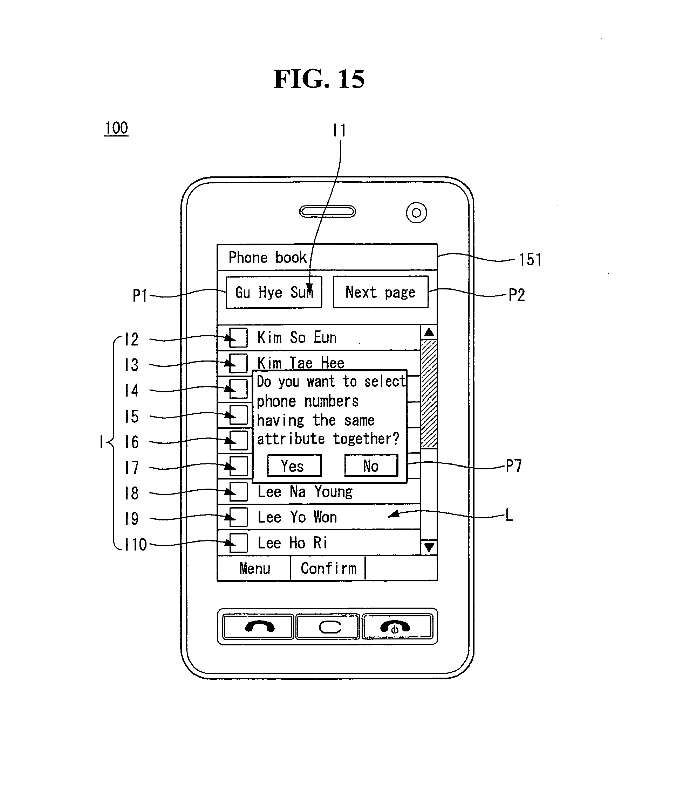

FIGS. 14 and 15 illustrate an operation of the mobile terminal 100 according to a sixth embodiment of the present invention.

Referring to FIGS. 14 and 15, items having the same attribute may be simultaneously selected from the items belonging to the list L.

Referring to FIG. 14, the user can select the first item I1 and drop the selected first item I1 to the selection window P1. Here, items having the same attribute as that of the first item I1 can be moved to the selection window P1 with the first item I1.

The attribute of an item may be set based on various standards. If the item is a phone number, the attribute of the item may include a group to which the phone number belongs, a phone number closely related to the phone number, a phone number stored at the same date when the phone number is stored, etc. If the item is a picture, the attribute of the item may include a picture photographed in the same place where the picture is captured, a picture including the same person who is in the picture, and a picture photographed at the same date when the picture is captured. If the item is a music file, the attribute of the item may include a music file having the same artist as that of the music file, a music file belonging to the same album as the album including the music file, and a music file generated at the same date when the music file is generated. That is, items may have various attributes and the user can select a desired attribute according to the item type. When the attribute is selected, even if the user selects only one of items corresponding to the attribute, the other items can be selected together with the item.

The first item I1 may belong to a friend group with the third and fifth items I3 and I5. The user may select a group as an attribute. In this case, if the user selects the first item I1, the first, third and fifth items I1, I3 and I5 can be selected together.

Referring to FIG. 15, a pop-up window P7 for confirming whether to execute a function of moving items together may be displayed. When the pop-up window P7 is displayed, the user can recognize that the function of moving items together is executed.

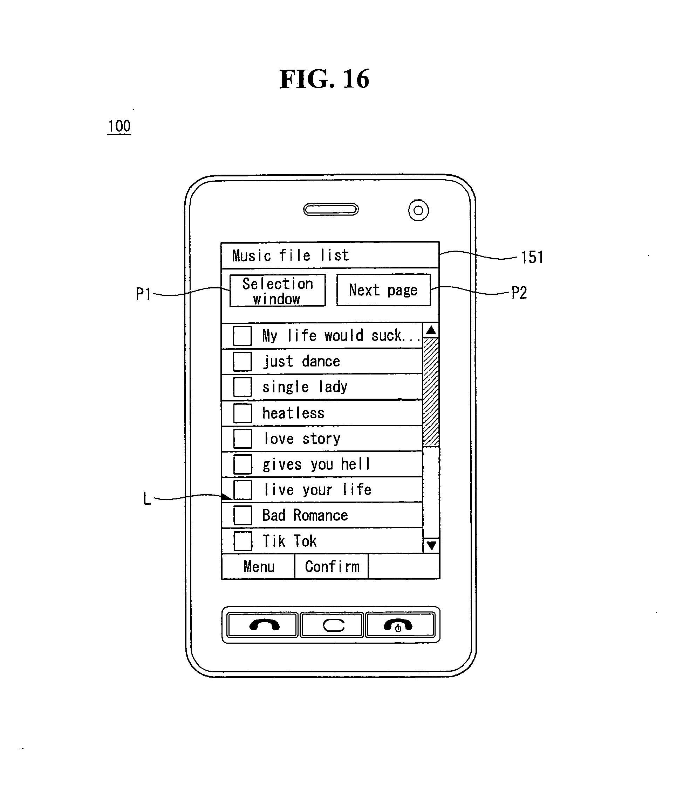

FIG. 16 illustrates an operation of the mobile terminal 100 according to a seventh embodiment of the present invention.

Referring to FIG. 16, the mobile terminal 100 may display a list of music files as the list L on the display unit 151. The user may move a desired music file selected from the music file list to the selection window P1. The user may select multiple music files from the music file list and move the selected multiple music files to the selection window P1, as described above.

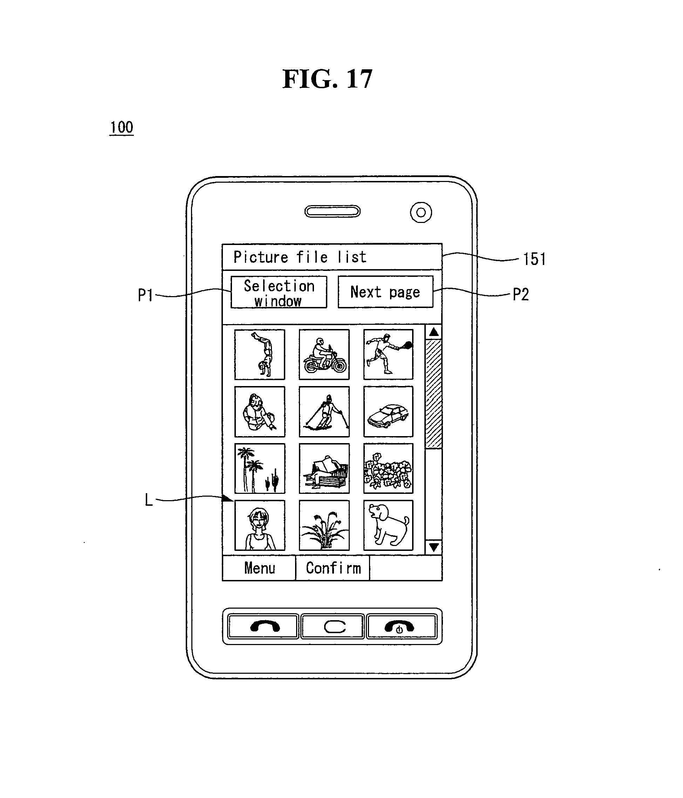

FIG. 17 illustrates an operation of the mobile terminal according to an eighth embodiment of the present invention.

Referring to FIG. 17, the mobile terminal 100 may display a list of picture files as the list L on the display unit 151.

In the above-described embodiments, web pages or image viewer applications are displayed on the display unit 151. However, the present invention is not limited thereto.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal comprising:
a display unit displaying a list of items; and
a controller receiving a touch input signal for moving at least one of the items to a first region, deleting the at least one item corresponding to the touch input signal from the list, displaying the title of the deleted item in the first region, substituting the deleted item by another item to update the list, and displaying the updated list.

2. The mobile terminal of claim 1, wherein the controller deletes an item having the same attribute as that of the at least one item corresponding to the touch input signal from the list.

3. The mobile terminal of claim 1 or 2, wherein the touch input signal corresponds to a drag-and-drop touch for moving the at least one item to the first region.

4. The mobile terminal of claim 1, 2 or 3, wherein the controller displays a pop-up window displaying the deleted item on the display unit.

5. A method of controlling a mobile terminal, comprising:
displaying a list of items on a display unit;
receiving a touch input signal for moving at least one of the items to a first region;
deleting the at least one item corresponding to the touch input signal from the list;
displaying the title of the deleted item in the first region; and
substituting the deleted item by another item to update the list and displaying the updated list.

6. The method of claim 5, wherein at least one item is deleted which has the same attribute as that of the at least one item corresponding to the touch input signal from the list.

7. The method of claim 5 or 6, wherein the touch input signal corresponds to a drag-and-drop touch applied to the at least one item displayed on the display unit.

8. The method of claim 5, 6 or 7, wherein the first region is separated from a region in which the list is displayed.

9. The method of any one of claims 5 to 8, further comprising displaying a pop-up window displaying the deleted item on the display unit.
